Europäisches Patentamt

**European Patent Office**

**Office européen des brevets**

(11) Publication number: **0 194 730**

**A1**

## EUROPEAN PATENT APPLICATION

(21) Application number: **86200391.0**

(22) Date of filing: **11.03.86**

(51) Int. Cl.⁴: **A 01 J 7/00**
**A 01 K 1/12**

(30) Priority: **12.03.85 NL 8500691**
**12.03.85 NL 8500692**

(43) Date of publication of application:
**17.09.86 Bulletin 86/38**

(84) Designated Contracting States:
**AT CH DE FR GB IT LI NL SE**

(71) Applicant: **C. van der Lely N.V.**
**Weverskade 10 P.O. Box 26**
**NL-3155 ZG Maasland(NL)**

(72) Inventor: **van der Lely, Cornelis**
**7 Brüschenrain**
**Zug(CH)**

(74) Representative: **Mulder, Herman et al,**
**Octrooibureau Van der Lely N.V. Weverskade 10 P.O. Box 26**
**NL-3155 ZG Maasland(NL)**

(54) Implement for milking animals in a stable.

(57) The invention relates to an implement for milking animals (1), such as cows, whereby at least a part of the implement is suited to be connected to the udder for a longer period. The implement may be provided with an envelope (7) surrounding the udder and containing teat cups being connected to the teats.

The implement may be provided with means to keep the animal (1) in action (moving), which means include a milking parlour floor (11) being movable relative to the animal (1).

FIG.1

## IMPLEMENT FOR MILKING ANIMALS IN A STABLE

The invention relates to an implement for milking animals in a stable, such as cows, which implement comprises at least one milking machine.

In order to carry out the milking of animals in a stable efficiently, it is aimed at to automize the milking procedure as much as possible. However, in practice it has been found that to connect the milking cluster to the udder of the animal is an action which is not easy to automize. In practice, during the milking procedure many other actions, such as the milking proper and the disconnection of the milking cluster, are already done automatically, i.e. without special actions of the staff being required. All the same, milking is a comparatively labour-consuming procedure, which is partly caused by again and again connecting the milking cluster to the udder and by other actions for taking care of the udder.

The invention contemplates an implement for milking animals in a stable, by means of which the milking can take place without again and again specific actions of the operating staff being required.

In accordance with the invention, for this purpose means are present for connecting the milking cluster to the udder of the animal for a longer period of time. In accordance with a feature of the invention, to that end parts of the milking machine may remain continuously connected to the udder of the animal, so that the milking can take place at any desirable point of time without there being the need for the milking cluster to be connected.

Furthermore, in accordance with the invention, there may be present a rinsing apparatus, by means of which

0194730

cleaning agents can be supplied to those parts of the milking machine that are connected to the udder. Said cleaning agents may consist of derging, disinfecting or rinsing liquids. These liquids may then be passed to the udder of the animal in such a manner that they flow along the teats of the udder. This may, in addition, have a massageing effect.

It may also be desirable to dry the udder and the teats after cleaning, for which purpose, in accordance with a feature of the invention an air compressor may be present for supplying air to the parts of the milking machine that are connected to the udder of the animal.

In accordance with another feature of the invention, there may be present means for milking the animal many times during 24 hours. In accordance with a feature of the invention, to that end there may be present a control system which alternately controls the milking, the cleaning and/or the air supply. In accordance with a further feature of the invention, there may also be present means for automatically supplying fodder to the animal. This supply can then also be controlled by the automatic control system of the implement.

In accordance with a still further feature of the invention, the implement may be provided with an envelope which is applied to the udder of the animal. This envelope may be attached to the body of the animal by means of one or more straps. The envelope may be made of synthetic material and may comprise teat cups for milking the animal. In accordance with a feature of the invention, these teat cups may be connected to the teats of the udder of the animal uninterruptedly.

The straps, by means of which the envelope is attached to the animal, may be applied at the top side and/or at the bottom side and/or alongside of the animal and, together with the necessary connecting straps, constitute a harness which can be applied sufficiently firmly around the animal and remains in position during the various movements of the animal. To the straps of the

0194730

harness may be attached the milk conduit, and any other conduits, which run from the said envelope to a connection in the stable. These conduits should be sufficiently flexible in order to be able to follow the various movements of the animal.

In accordance with a feature of the invention, the implement for milking animals in a stable, which implement comprises at least one milking machine, may be provided with means for automatically milking the animal six or more times during 24 hours. The milking may also be done more than twelve times during 24 hours. The frequent milking of the animal causes the milk yield to be increased.

In accordance with a feature of the invention, there are present means for cleaning and drying the implement previous to milking. For it may be desirable to clean and/or dry not only the udder and the teats but also parts of the implement previous to milking.

In accordance with a feature of the invention, a computer may be present for controlling the various actions of the implement, and the implement may be connected continuously to the udder of the animal.

In accordance with a feature of the invention, the implement for milking animals, such as cows, in a stable, which implement comprises at least one milking machine, may have a number of teat cups through which also a liquid can be supplied to the teats of the udder of the animal. In this manner the liquid can massage the teats. In accordance with the invention, the liquid may, at least in part, be supplied through the milk conduit and the liquid may contain a cleaning agent and/or disinfectant. In accordance with a feature of the invention, the liquid may be recycled from the udder for a possible re-use.

In accordance with a feature of the invention, the implement for milking animals, such as cows, in a stable, which implement comprises at least one milking machine, may have a number of teat cups through which also air can be supplied to the teats of the udder of the animal, which air, at least in part, can be supplied through the milk

0194730

conduit. In this connection, the implement may be constructed such that the air can flow away along the teats of the animal, so that the teats can be dried.

In accordance with a further feature of the invention, the implement may be fitted in a stable which comprises one or more rows of places of residence for animals arranged side by side. Furthermore, a computer may then be present for the control of the implement. Also, in accordance with a feature of the invention, there may be present means for alternately supplying to the teat cups a vacuum for milking, liquid for cleaning and/or air for drying.

In addition, automatic control means may be present for milking and moving the animal, for keeping the place of residence clean, as well as for feeding the animal. The various actions may be controlled by a computer, so that the task of the operating staff can be reduced to a supervision at regular intervals.

The invention furthermore relates to a stable for animals, such as cows, which stable comprises at least one place of residence where an animal can lie or stand. When an animal is situated in a stable for a longer period of time, it may be of importance that it gets sufficient exercise. Also may be of importance the regular cleaning of the place of residence of the animal, which is a labour-consuming occupation.

The invention contemplates a stable for animals, such as cows, in which the treatment of the animals can be carried out in an effective manner.

In accordance with the invention, for this purpose the floor of the place of residence of an animal is constructed, at least partly, movably relative to the animal present on the place of residence. By moving the floor, there is in fact obtained a greater effective floor surface of the place of residence. In accordance with a further feature of the invention, the floor may, at least in part, consist of a conveyor belt which may be supported by rollers. The conveyor belt may be made of synthetic material or rubber. The application of a conveyor belt in order to obtain a movable floor surface is advantageous in that it provides a continuously movable floor.

In accordance with a further feature of the invention, the floor is movable in the direction opposite to the walking direction of the animal, i.e. from the front side to the rear side of the place of residence of the animal. As a result, the animal can perform a walking movement during the movement of the floor. In accordance with a further feature of the invention, a milking machine may be present, parts of which are connected to the udder of the animal. Consequently, it is possible to milk the animal at any desirable point of time, or to clean or to massage the udder.

The stable for animals, such as cows, which stable comprises at least one place of residence where an animal can lie or stand, may be provided with means for setting the animal in motion. These means, which may comprise a sound signal or a light signal, can incite the animal to rise if it is lying and/or to go and walk if it is standing. In accordance with a further feature of the invention, the floor of the place of residence is constructed, eat least in part, movably and it can move relative to the animal in rearward direction. The floor may then consist of a conveyor belt. In accordance with a feature of the invention, the movement of the floor may be driven, for which purpose an electric motor may be present. The animal can be incited to move by driving the floor by means of driving means, which drive, in accordance with a feature of the invention, may be such that the animal is forced to perform walking movements.

In accordance with a feature of the invention, the stable for animals, such as cows, which stable comprises at least one place of residence where the animal can lie or stand, may be provided with signalling means for inciting the animal to rise from a lying position. These signalling means may comprise a loudspeaker arranged near the head of the animal, via which loudspeaker music may be produced.

- 6 -

0194730

Also, any other signal that is recognizable to the animal may be delivered in order to incite the animal to certain actions. Furthermore, in accordance with the invention, means may be present for connecting a milking machine to the udder of the animal.

In accordance with a further feature of the invention, the stable for animals, such as cows, which implement comprises at least one place of residence where an animal can lie or stand, may be provided with a movable, manure-removing apparatus. By means of this the place of residence can be kept clean automatically. In accordance with a feature of the invention, the manure-removing apparatus may comprise a conveyor belt which may be drivable by means of an electric motor. By means of the conveyor belt manure and other dirt can be discharged to the rear side of the place of residence and be deposited on a conveyor which further discharges the manure. This conveyor may be arranged substantially transverse to the place of residence and move along a number of places of residence. The latter conveyor may also be provided with a conveyor belt that is supported on rollers.

In accordance with a feature of the invention, the stable may be provided with one or more rows of places of residence arranged side by side in order to obtain an effective filling of the stable. At the front side of a place of residence there may then be arranged a feeding gutter for feeding the animal, which gutter may extend along a number of places of residence. The fodder may be supplied automatically and there may be present means for discharging manure along the rear side of the place of residence, which may be done effectively if the places of residence are arranged in a row.

In accordance with a feature of the invention, an animal that is situated on a place of residence may be connected to an automatic milking machine, which connection may be present continuously. Furthermore, in accordance with another feature of the invention, there may be present automatic control means, including a computer, for con-

**0194730**

trolling milking and moving the animals, keeping the places of residence clean, as well as feeding the animals.

Preferably, the animals are kept in their places in the stable throughout the year and the udders of the animals are connected continuously to the milking implement.

This ensures that a milking machine works continuously. It then depends on the number of milking machines and on the quantity of animals to establish how often during 24 hours an animal is to be milked. This increases the efficiency of the milking machine. Moreover, the milk production is increased by the frequent milking.

The animals may be milked many times, e.g. from six to twelve times, during 24 hours.

Between the milking periods, it is preferred to use the part of the milking machine that is not used for milking to supply a liquid to the teats of the animal. This liquid may comprise a cleaning agent. Furthermore, there may also be supplied air to the teats of the animal throught the part of the milking machine that is not used for milking. The liquid may be circulated. The air may escape near the teats. The supply of liquid and air may also stimulate the blood circulation in the teats.

For the benefit of the hygiene and of the animal's health, the floor of the place of residence of an animal may, at least in part, be constructed movably. This ensures that the animal can perform movements, while it remains connected to the milking machine. In case the floor comprises a backwardly engine-driven conveyor belt, the animal will be compelled to move forwards at a certain speed relative to the conveyor belt. In addition, dust and contaminations will be moved backwards by the conveyor belt, so that a new, clean place of residence for the animal is created.

Preferably, the implement comprises control means which are controlled by a computer, so that the milking and the movement of the animals, the cleaning of the places of residence, as well as the feeding of the animals proceed automatically.

For a better understanding of the invention and to show how the same may be carried into effect, reference will now be made, by way of example, to the accompanying drawings, in which:

Figure 1 is a cross-sectional view of a part of a stable, in which the implement has been arranged, and

Figure 2 is a top view of such a stable.

In the Figures, which render the embodiment very schematically, corresponding parts have been indicated by similar reference numerals.

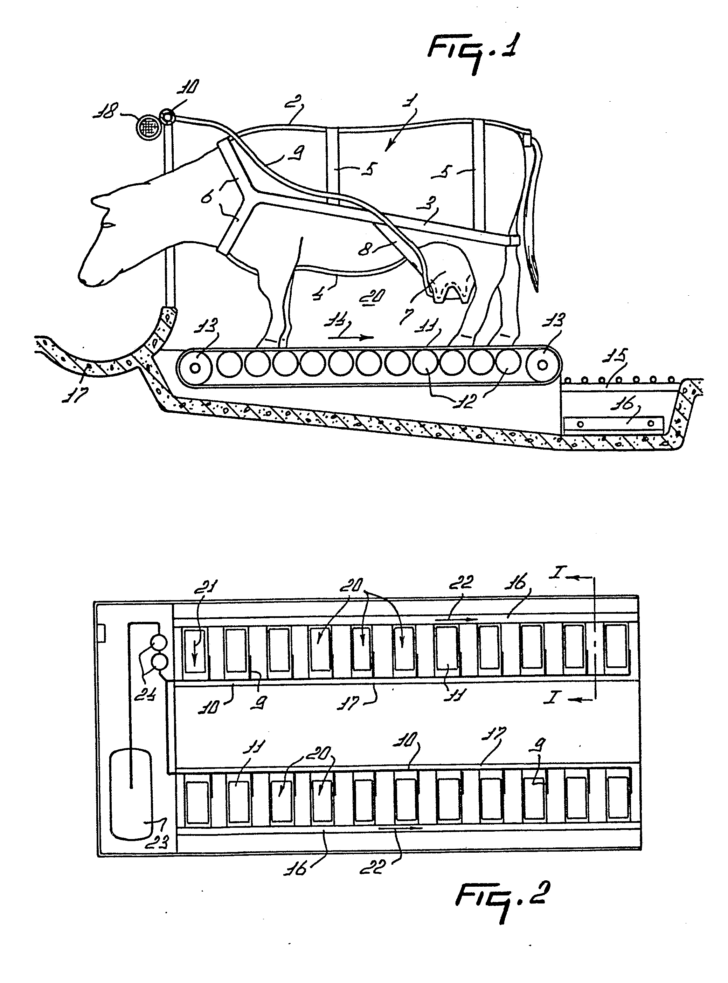

Figure 1 shows an animal 1, in this embodiment a cow, provided with a harness which consists of a number of straps. On the back of the cow there is arranged a strap 2, at its side strap 3 and at its bottom side, between the forelegs, a strap 4. The straps 2, 3 and 4 are interconnected by means of straps 5 and 6 and together with those straps constitute a harness applied around the cow, to which harness is attached an envelope 7 which extends around the udder of the cow. The strap 8 constitutes a connection between the strap 3 and the envelope 7. The envelope 7 may be provided with means for milking the cow and/or with means for cleaning, massageing or drying the udder. The means in question may remain connected continuously to the udder and may be adapted to perform the said functions successively.

Through a conduit 9, which is attached to the straps 8, 3 and 5, the envelope 7 is connected to a milking apparatus and/or another apparatus for supplying liquid or air to the udder or discharging same from the udder. The conduit 9 is connected to the fixed conduit 10 in such a flexible manner that the cow can perform the necessary movements.

The floor on which the cow stands is constructed movably, namely by means of an endless belt 11, the top side of which constitutes the floor of the place of residence of the cow. The endless belt 11 is supported by a number of rollers 12 adapted to rotate about horizontal shafts. In addition, there are present two end rollers 13, around which the endless belt 11 is tightened. By driving one of the end rollers 13, the floor of the place of residence for the cow can be moved in the direction of the arrow 14, so that the cow is compelled to walk forwards and, moreover, the dirt deposited on the floor of the place of residence is discharged backwardly relative to the cow. The backwardly discharged dirt falls through a grating 15 onto a conveyor belt 16 arranged transversely relative to the place of residence, which conveyor belt further discharges the said dirt, manure etc. Behind the cow, stationary means may be arranged in order to incite the cow to go and walk.

As is apparent from Figure 1, at the front side of the place of residence there is situated a gutter 17, from which the animal can eat and/or drink, for which purpose, whether or not automatically, the required fodder is supplied. Furthermore, there is present on the place of residence a loudspeaker 18 for giving sound signals to the cow.

Figure 2 shows schematically a plan of a stable wherein a number of places of residence 20 for animals is arranged. The animals can stand on the place of residence with their heads in the direction of the arrow 21. Each of the places of residence 20 is provided with a movable floor, so that the animal present on the place of residence can be compelled to perform movements and the dirt, manure etc. present on the floor can be discharged to the conveyor belt 16 arranged transversely relative to the places of residence 20, which conveyor belt moves in the direction of the arrow 22.

Figure 2 furthermore shows a milking apparatus 23 which, via the necessary containers 24 and via conduit 10, is connected to the various places of residence 20. Also, apparatuses may be present for, or parts of the milking machine may be used for the supply of liquid, if necessary provided with a cleaning or disinfecting liquid, to the teats of the udder, or for the supply of air.

## CLAIMS

1.    An implement for milking animals, such as cows, in a stable, which implement comprises at least one milking machine, characterized by means for connecting the milking cluster to the udder of the animal for a longer period of time.

2.    An implement as claimed in claim 1, characterized in that parts of the milking machine may remain continuously connected to the udder of the animal.

3.    An implement as claimed in claim 1 or 2, characterized by a rinsing apparatus, by means of which cleaning agents can be supplied to those parts of the milking machine that are connected to the udder.

4.    An implement as claimed in any one of the preceding claims, characterized by an air compressor for supplying air to the parts of the milking machine that are connected to the udder of the animal.

5.    An implement as claimed in any one of the preceding claims, characterized by means for automatically supplying fodder to the animal.

6.    An implement as claimed in any one of the preceding claims, characterized by an envelope which is applied to the udder of the animal.

7.    An implement as claimed in claim 6, characterized in that the envelope is attached by means of one or more straps, which are attached to the body of the animal.

8.    An implement as claimed in claim 6 or 7, characterized in that the envelope consists of synthetic material.

9.    An implement as claimed in any of claims 6 - 8, characterized in that the envelope comprises teat cups.

10.    An implement as claimed in any one of the claims 7 - 9, characterized in that a milk conduit is attached to the straps.

0194730

FIG.1

FIG.2

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-2 812 027 (G. WEISS)<br>* Whole document * | 1,2 | A 01 J 7/00<br>A 01 K 1/12 |
| A | | 4,6-9 | |
| | --- | | |
| A | DE TELEGRAAF, 4th December 1984, page T23; E. BOS: "Land- en tuinbouw" | 3-5 | |
| | --- | | |
| A | DD-A- 82 592 (E. GABLER) | | |
| | ----- | | |

TECHNICAL FIELDS SEARCHED (Int. Cl.4)

A 01 J
A 01 K

The present search report has been drawn up for all claims

| Place of search | Date of completion of the search | Examiner |
|---|---|---|
| THE HAGUE | 04-06-1986 | NEHRDICH H.J |